# EUROPEAN PATENT APPLICATION

(11) **EP 4 848 083 A1**
(43) Date of publication of application: **02.12.2026**
(21) Application number: 25733595.0
(22) Date of filing: 27.03.2025
(51) Int. Cl.: G06F 9/448

(54) **IMAGE PROCESSING METHOD AND APPARATUS, AND ELECTRONIC DEVICE, MEDIUM AND PRODUCT**

(71) Applicant: ECARX TECHNOLOGY PTE. LTD., Singapore 048580 (SG)
(72) Inventor: DI, Leilei, Wuhan, Hubei 430056 (CN)
(74) Representative: Santarelli
(86) International application number: PCT/CN2025/085535
(87) International publication number: WO 2026/199401

(57) **Abstract**

The present disclosure provides an image processing method and apparatus, an electronic device, a medium, and a product. The method includes: acquiring around view activation information of a vehicle; invoking, according to the around view activation information, a corresponding processing module to apply for a native window resource; and processing graphic data collected by the vehicle to obtain a processed image, and displaying the processed image by using the native window resource. The method in the present disclosure can combine the ecological advantages of an Android system and the efficient image rendering ability of a native window, and greatly reduce the system development and maintenance costs while ensuring low delay and high performance, and is suitable for application scenarios with high requirements for image processing in a modern in-vehicle intelligent cockpit.

## Description

### TECHNICAL FIELD

The present disclosure relates to the field of vehicle technologies and, in particular, to an image processing method and apparatus, an electronic device, a medium, and a product.

### BACKGROUND

By setting up, around a vehicle, a plurality of wide-angle cameras which can cover all fields of view around the vehicle, an in-vehicle around view monitor processes multi-channel video images collected at the same time to obtain a 360-degree vehicle body top view around the vehicle, and finally displays an image on a screen of a center console, which is intuitive and has no blind spot, it may allow a driver to control the vehicle to park in place or pass through a complex road calmly, and effectively reduce the occurrence of accidents such as scraping, collision, and collapse, etc.

In the prior art, the in-vehicle around view monitor generally uses framebuffer (Framebuffer) technology. Framebuffer is a set of application programming interfaces provided in a Linux system for a display device, which abstracts video memory as a device and allows upper-level applications to directly read and write a display buffer in a graphics mode, thereby controlling the display content on the screen. However, for scenarios requiring multi-camera data processing and simultaneous display, the framebuffer cannot provide effective graphics composition and rendering support, and developers need to use additional middleware or libraries to process graphics, which increases the development difficulty.

### SUMMARY

Embodiments of the present disclosure provide an image processing method and apparatus, an electronic device, a medium, and a product.

According to some embodiments, a first aspect of the present disclosure provides an image processing method, which includes: acquiring around view activation information of a vehicle; invoking, according to the around view activation information, a corresponding processing module to apply for a native window resource; and processing graphic data collected by the vehicle to obtain a processed image, and displaying the processed image by using the native window resource.

In some embodiments, the invoking, according to the around view activation information, the corresponding processing module to apply for the native window resource includes: determining, according to a source of the around view activation information, a target processing module corresponding to the around view activation information from a plurality of candidate processing modules; and invoking the target processing module to apply for the native window resource.

In some embodiments, the determining, according to the source of the around view activation information, the target processing module corresponding to the around view activation information from the plurality of candidate processing modules includes: if the around view activation information is a control instruction input by a user, determining a foreground processing application as the target processing module corresponding to the around view activation information.

In some embodiments, the determining, according to the source of the around view activation information, the target processing module corresponding to the around view activation information from the plurality of candidate processing modules includes: if the around view activation information is state information of the vehicle, determining, according to the state information, the target processing module corresponding to the around view activation information from a foreground processing application and a background processing service.

In some embodiments, the determining, according to the state information, the target processing module corresponding to the around view activation information from the foreground processing application and the background processing service includes: if the vehicle is not fully started, determining the background processing service as the target processing module corresponding to the around view activation information; and if the vehicle has been fully started, determining the foreground processing application as the target processing module corresponding to the around view activation information.

In some embodiments, the method further includes: when the background processing service is used as the target processing module corresponding to the around view activation information, creating a Surface object through SurfaceComposerClient, and writing the graphic data collected by the vehicle into the Surface object; and when the foreground processing application is used as the target processing module corresponding to the around view activation information, creating a Surface object through SurfaceView, and writing the graphic data collected by the vehicle into the Surface object.

In some embodiments, the processing the graphic data collected by the vehicle to obtain the processed image includes: writing the graphic data collected by the vehicle into a graphic buffer corresponding to the native window resource, rendering the graphic data in the graphic buffer, and adding the graphic buffer into a buffer queue after the rendering is completed; and acquiring the graphic data in the graphic buffer from the buffer queue for composition to obtain the processed image.

In some embodiments, before the adding the graphic buffer into the buffer queue, the following is further included: locking the graphic data in the graphic buffer.

In some embodiments, the method further includes: acquiring around view deactivation information of the vehicle, and destroying the native window.

According to some embodiments, a second aspect of the present disclosure provides an image processing apparatus, which includes: an acquisition module, configured to acquire around view activation information of a vehicle; a creation module, configured to invoke, according to the around view activation information, a corresponding processing module to apply for a native window resource; and a display module, configured to process graphic data collected by the vehicle to obtain a processed image, and display the processed image by using the native window resource.

According to some embodiments, a third aspect of the present disclosure provides an electronic device, which includes: a processor and a memory communicatively connected with the processor; where the memory stores a computer executable instruction; and the processor executes the computer executable instruction stored in the memory to implement the method according to any one described above.

According to some embodiments, a fourth aspect of the present disclosure provides a computer-readable storage medium, where the computer-readable storage medium stores a computer executable instruction which, when executed by a processor, is used for implementing the method described above.

According to some embodiments, a fifth aspect of the present disclosure provides a computer program product, where the computer program product includes a computer executable instruction which, when executed by a processor, is used for implementing the method described above.

In the image processing method and apparatus, the electronic device, the medium, and the product provided in the embodiments of the present disclosure, the corresponding processing module is invoked according to the acquired around view activation information of the vehicle, to apply for the native window resource, and the native window resource is used to display a processing result of the graphic data collected by the vehicle. Thus, the around view activation information can be responded to and around view display can be activated reliably in different scenarios. Additionally, the native window resource is used for the around view display, which enables direct interaction with an underlying graphics processor, realizes rapid image rendering through hardware acceleration, and makes full use of other functional modules in the Android system, thus effectively improving the processing effect of graphic data and reducing the development difficulty at the same time. Therefore, ecological advantages of the Android system and the efficient image rendering ability of the native window can be combined, and development and maintenance costs of a system can be greatly reduced while low delay and high performance are ensured, which is suitable for application scenarios with high requirements for image processing in a modern in-vehicle intelligent cockpit.

### BRIEF DESCRIPTION OF DRAWINGS

The drawings herein, which are incorporated into and constitute a part of this specification, show embodiments conforming to the present disclosure and, together with the description, serve to explain principles of the embodiments of the present disclosure.
FIG. 1 exemplarily shows an architecture diagram of an in-vehicle infotainment system provided in an embodiment of the present disclosure.
FIG. 2 exemplarily shows a flow diagram of an image processing method provided in an embodiment of the present disclosure.
FIG. 3 exemplarily shows a scenario diagram of a producer-consumer model provided in an embodiment of the present disclosure.
FIG. 4 exemplarily shows a scenario diagram of image rendering provided in an embodiment of the present disclosure.
FIG. 5 exemplarily shows a scenario diagram of another interactive interface provided in an embodiment of the present disclosure.
FIG. 6 exemplarily shows a structure diagram of an electronic device provided in an embodiment of the present disclosure.

Through the above drawings, clear embodiments of the present disclosure have been shown, which will be described in more detail hereinafter. These drawings and written descriptions are not intended to limit the scope of the concept of the present disclosure in any way, but to explain the concept of the present disclosure to those skilled in the art by referring to specific embodiments.

### DESCRIPTION OF EMBODIMENTS

Exemplary embodiments will be described in detail here, and examples thereof are shown in the drawings. When the following description refers to the drawings, unless otherwise indicated, same numbers in different drawings indicate same or similar elements. Implementations described in the following exemplary embodiments do not represent all implementations consistent with the present disclosure. Rather, they are merely examples of apparatuses and methods consistent with some aspects of the present disclosure as described in detail in the appended claims.

First, terms involved in the embodiments of the present disclosure are explained.

Window: an object that represents a separate view area on a display. It is controlled by Window Manager, and is composed of views. These views form a View Hierarchy structure. This View Hierarchy is rendered onto a Surface that is created by WindowFlinger for the Window.

View: a view represents a basic module of a user interaction component. A view occupies a rectangular area on a screen and is responsible for graphics drawing and interaction events in this area. Views of each window in Android constitute a View Hierarchy structure.

Surface: a Surface is created by SurfaceFlinger and handed over to Window Manager, and is handed over by the Window Manager to a Window for drawing of content of views in the window. The Surface is an interface for graphics drawing in an Android system, represents a screen surface on which a drawing operation may be performed, and provides a buffer (buffer) as a data bearing object. Applications may send a rendering instruction to a GPU through this buffer.

Native Window (Native Window) is a window abstract class for displaying graphics in the Android system, and provides a series of methods for managing graphic buffers. Through the Native Window, drawing surface Surface of a window may be acquired, and graphics drawing may be performed on the Surface.

In the Android system, the Surface and the Native Window work together to realize display and management of graphics. The Surface encapsulates information related to the Native Window, while the Native Window is underlying implementation thereof and provides a method for manipulating image data. Developers perform graphics drawing through the Surface, and interact with underlying graphics hardware through the Native Window to achieve efficient processing and display of graphics.

SurfaceView is a View component and belongs to an application layer. It provides a window to display image content in a Surface. The SurfaceView internally manages a Surface object and is responsible for drawing its content to the screen.

SurfaceComposerClient is a client API (interface) provided by SurfaceFlinger, belongs to a system service layer, and is configured to create and manage a Surface. Most application processes may interact with the SurfaceFlinger through SurfaceComposerClient.

Vehicle Hal is a hardware abstraction layer (Hardware Abstraction Layer, abbreviated as Hal) service related to vehicle services, and mainly defines a standardized interface and attribute management for interacting with an automobile hardware.

By setting up, around a vehicle, a plurality of wide-angle cameras which can cover all fields of view around the vehicle, an in-vehicle around view monitor processes multi-channel video images collected at the same time to obtain a 360-degree vehicle body top view around the vehicle, and finally displays an image on a screen of a center console, which is intuitive and has no blind spot, it may allow a driver to control the vehicle to park in place or pass through a complex road calmly, and effectively reduce the occurrence of accidents such as scraping, collision, and collapse, etc.

In the prior art, an in-vehicle around view system (Around-View System, abbreviated as AVM) generally uses framebuffer (Framebuffer) technology. Framebuffer is a set of application programming interfaces provided in a Linux system for a display device, which abstracts video memory as a device and allows upper-level applications to directly read and write a display buffer in a graphics mode, thereby controlling the display content on the screen. However, for scenarios requiring multi-camera data processing and simultaneous display, the framebuffer cannot provide effective graphics composition and rendering support, and developers need to use additional middleware or libraries to process graphics, which increases the development difficulty.

Technical solutions of the present disclosure will be illustrated with specific embodiments. The following several specific embodiments may be combined with each other, and same or similar concepts or processes may not be repeated in some embodiments.

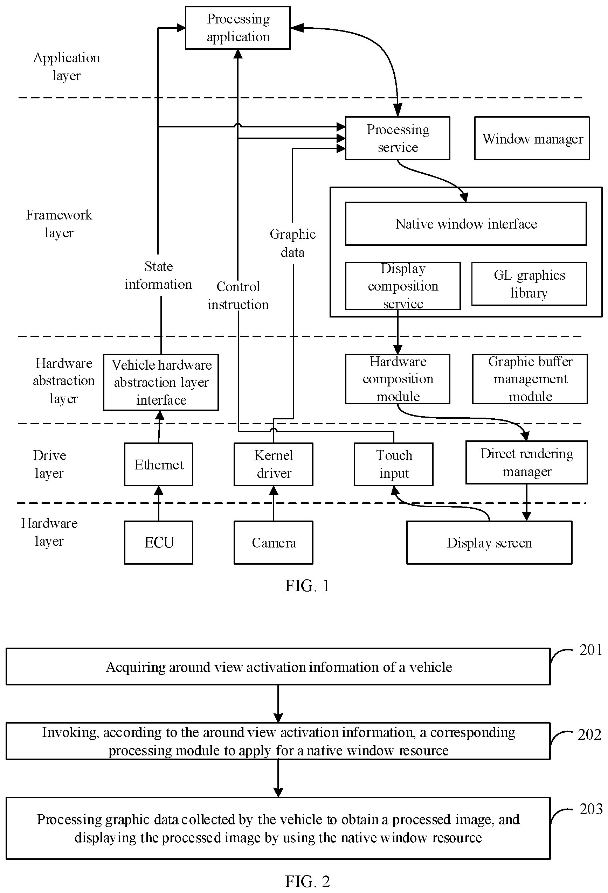

An in-vehicle infotainment system provided in an embodiment of the present disclosure will be described with reference to FIG. 1 below.

FIG. 1 is an architecture diagram of an in-vehicle infotainment system provided in an embodiment of the present disclosure. As shown in FIG. 1, the in-vehicle infotainment system may be divided into a hardware (hardware) layer, a drive (drive) layer, a hardware abstraction layer (Hardware Abstraction Layer, abbreviated as Hal), a framework (Framework) layer and an application layer. The hardware layer includes an electronic control unit (Electronic Control Unit, abbreviated as ECU), a camera, and a display screen (display). The electronic control unit and the display screen may acquire around view activation information, start an in-vehicle around view monitor, and display an around view image of a vehicle on the display screen; where the around view activation information may include reverse gear state information of the vehicle obtained by the electronic control unit, or a control instruction input by a user and received by the display screen.

Specifically, the electronic control unit acquires gear information of the vehicle, and sends the gear information to a vehicle hardware abstraction layer (Vehicle Hal) interface through Ethernet (Ethernet, abbreviated as eth). The vehicle hardware abstraction layer interface sends the gear information to a processing application (AVM APP) in the foreground (the application layer) or a processing service (AVM Service) in the background (the framework layer). When the gear information indicates reverse gear, the processing application/processing service that receives the gear information may activate around view processing. The display screen receives a control instruction input by the user through touch, and sends the control instruction to the processing application in the foreground, so that the processing application activates the around view processing.

An image processing method provided in an embodiment of the present disclosure is described below with reference to FIG. 2.

FIG. 2 is a flow diagram of an image processing method provided in an embodiment of the present disclosure. An execution subject of the method may be an in-vehicle infotainment system. As shown in FIG. 2, the image processing method provided in this embodiment may include:
S201, acquiring around view activation information of a vehicle;
S202, invoking, according to the around view activation information, a corresponding processing module to apply for a native window resource;
S203: processing graphic data collected by the vehicle to obtain a processed image, and displaying the processed image by using the native window resource.

In a specific implementation, after acquiring the around view activation information of the vehicle, the in-vehicle infotainment system invokes the corresponding processing module to apply for the native window (Native Window) resource, and writes the graphic data collected by the vehicle into a Sureface of an applied window. By performing processing such as rendering and composing, etc., on the graphic data in the Sureface, the processed image is obtained, and the processed image is finally displayed on a display screen through the applied window resource.

The Native Window can directly interact with an underlying graphics processor (GPU), and can realize rapid image rendering through hardware acceleration; the Native Window can run flexibly on a variety of hardware platforms, and is compatible with low-power embedded chips and high-performance multi-core processors, which makes the solution adapt to configuration requirements of different vehicles; through a native hardware abstraction layer interface of an Android system, the Native Window can seamlessly interface with camera modules, displays, and image processing units of different manufacturers, which further enhances the portability of the system; the Native Window can be closely integrated with multimedia framework of the Android system, which supports capture, processing and display of a fast image stream, effectively reducing system overhead; the Native Window can make full use of other functional modules in an Android ecosystem, such as an image processing algorithm module, a display management module, a sensor management module, etc., so that developers can quickly adapt to different vehicle hardware platforms, and at the same time, more convenient addition of functions such as AI image enhancement processing, night vision mode, and the like is allowed, to meet the needs of different in-vehicle scenarios; and as an open source system, the Android system does not need additional license fees, and the developers can freely modify and optimize the system, and at the same time, due to the increasing application of the Android system in the vehicle market, the ecological environment is gradually mature, and the compatibility and support of related hardware and software are also more abundant, which further reduces the overall development cost.

In this embodiment, the corresponding processing module is invoked according to the acquired around view activation information of the vehicle, to apply for the native window resource, and the native window resource is used to display a processing result of the graphic data collected by the vehicle. Thus, the around view activation information can be responded to and around view display can be activated reliably in different scenarios. Additionally, the native window resource is used for the around view display, which enables direct interaction with an underlying graphics processor, realizes rapid image rendering through hardware acceleration, and makes full use of other functional modules in the Android system, thus effectively improving the processing effect of graphic data and reducing the development difficulty at the same time.

In some embodiments, the invoking the corresponding processing module to apply for the native window resource includes:
determining, according to a source of the around view activation information, a target processing module corresponding to the around view activation information from a plurality of candidate processing modules; and
invoking the target processing module to apply for the native window resource.

In a specific implementation, for different sources of around view activation information, different processing modules may be used as the target processing module, so that the around view display can be started effectively in response to the around view activation information.

In a possible implementation, the determining, according to the source of the around view activation information, the target processing module corresponding to the around view activation information from the plurality of candidate processing modules includes:
if the around view activation information is a control instruction input by a user, determining a foreground processing application as the target processing module corresponding to the around view activation information.

In a specific implementation, as shown in FIG. 1, when the around view activation information is a control instruction input by the user through touch on the display screen, the display screen will send the received control instruction to the foreground processing application. As the target processing module, the foreground processing application applies for the window resource, acquires the graphic data collected by a camera of the vehicle, and writes the graphic data into a Surface of an applied window. The in-vehicle infotainment system will process the graphic data in the Surface, including but not limited to rendering and composing etc., to obtain a composed image, and display the composed image on the display screen through the window resource, so as to effectively perform the around view display in response to the control instruction input by the user.

In a possible implementation, the determining, according to the source of the around view activation information, the target processing module corresponding to the around view activation information from the plurality of candidate processing modules includes:
if the around view activation information is state information of the vehicle, determining, according to the state information, the target processing module corresponding to the around view activation information from the foreground processing application and a background processing service.

In a specific implementation, as shown in FIG. 1, when the around view activation information is the state information of the vehicle, an electronic control unit will send the acquired state information to the foreground processing application or the background processing service, and the foreground processing application or the background processing service will apply for the window resource, acquire the graphic data collected by the camera of the vehicle, and write the graphic data into a Surface of an applied window. The in-vehicle infotainment system will process the graphic data in the Surface, including but not limited to rendering and composing, to obtain a composed image, and display the composed image on the display screen through the window resource, thus effectively activating the around view display automatically based on a vehicle state.

For example, the state information of the vehicle may include gear information. When the gear information indicates reverse gear, the target processing module invokes a native window interface to create a graphic buffer.

For example, the state information of the vehicle may include road condition information. When a road condition is complex (for example, a road being narrow), the target processing module invokes a native window interface to create a graphic buffer.

For example, the determining, according to the state information, the target processing module corresponding to the around view activation information from the foreground processing application and the background processing service includes:
if the vehicle is not fully started, determining the background processing service as the target processing module corresponding to the around view activation information; and
if the vehicle has been fully started, determining the foreground processing application as the target processing module corresponding to the around view activation information.

In a specific implementation, when the vehicle is just started, the in-vehicle infotainment system is not fully started, and thus, the foreground processing application cannot work reliably. At this time, the background processing service may be used as the target processing module, and a native window interface may be invoked by the background processing service to create a graphic buffer, so that the around view display can be automatically activated according to the state information of the vehicle when the vehicle is not fully started. When the vehicle has been fully started, the foreground processing application is used as the target processing module, which can not only obtain the state information of the vehicle and activate the around view display according to the state information of the vehicle, but also receive a control instruction input by the user through touch on an in-vehicle display screen to trigger the around view display, and thus, the reliability of the around view display can be effectively improved.

For example, the method further includes:
when the background processing service is used as the target processing module corresponding to the around view activation information, creating a Surface object through SurfaceComposerClient, and writing the graphic data collected by the vehicle into the Surface object; and
when the foreground processing application is used as the target processing module corresponding to the around view activation information, creating an Surface object through SurfaceView, and writing the graphic data collected by the vehicle into the Surface object.

When the foreground processing application is used as the target processing module, the processing application will apply for an application (Activity) window in a JAVA layer as a native window, and apply for creating the Surfaceview. The processing application receives a Surfacecreated notification, which indicates the success of the applying of the Surfaceview. When the processing application creates the SurfaceView, the system will apply to SurfaceFlinger for a new Surface through SurfaceComposerClient and allocate an independent graphic buffer. The processing application transfers the Surface object to the local through setSurface. On the C++ side, the background processing service receives the Surface object through nativeSetSurface, acquires an ANativeWindow object through ANativeWindow_fromSurface, and then operates a local display frame. When the background processing service is used as the target processing module, SurfaceView of the application layer cannot work reliably because the in-vehicle infotainment system is not fully started, and the processing service will directly invoke a SurfaceComposerClient client to apply for a native window Surface resource, to obtain the Surface object.

In a possible implementation, the processing the graphic data collected by the vehicle to obtain the processed image includes:
writing the graphic data collected by the vehicle into a graphic buffer corresponding to the native window resource, rendering the graphic data in the graphic buffer, and adding the graphic buffer into a buffer queue after the rendering is completed; and
acquiring the graphic data in the graphic buffer from the buffer queue for composition to obtain the processed image.

In a specific implementation, after a graphics processing interface is invoked to process the graphic data in the graphic buffer, the graphic buffer may be added into the buffer queue, and wait for display; and a display composition service acquires the graphic data in the graphic buffer from the buffer queue for composition, which ensures the efficient transmission and rendering of graphic data and realizes a smooth user interface experience.

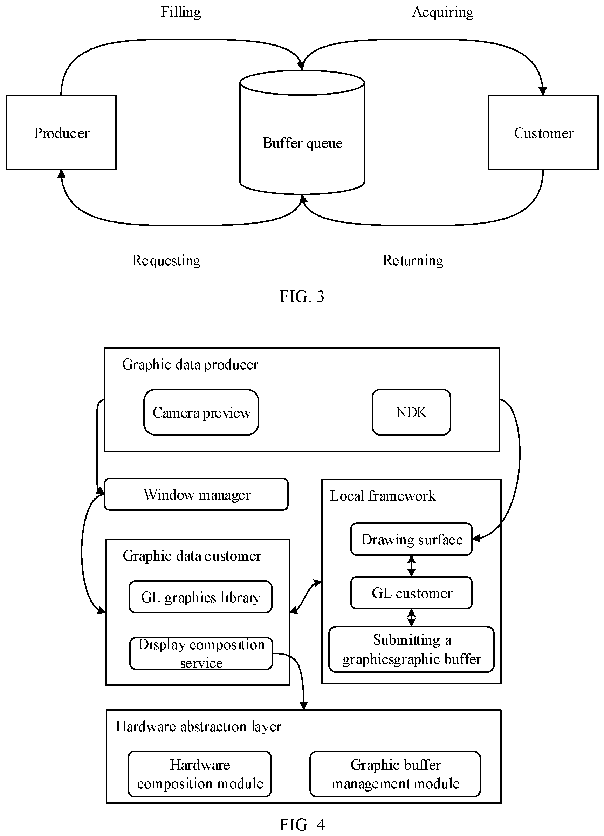

FIG. 3 is a scenario diagram of a producer-consumer model provided in an embodiment of the present disclosure. As shown in FIG. 3, in an in-vehicle infotainment system, a producer-consumer model is used for Surface rendering, and is implemented by a Surface and SurfaceFlinger.

BufferQueue (buffer queue) is a link connecting the Surface and a Layer of the SurfaceFlinger. When graphic data in an upper layer is rendered to the Surface, it is actually rendered to a GraphicBuffer, and then the GraphicBuffer is submitted to the BufferQueue through IGraphicBufferProducer, to cause the SurfaceFlinger to perform subsequent composition display work.

A classic workflow of the BufferQueue is as follows:
a producer requests a free buffer: *dequeueBuffer()*;
the producer fills the buffer and returns the buffer to a queue: *queueBuffer()*;
a consumer acquires a buffer: *acquireBuffer()*;
after being used by the consumer, the buffer is returned to the queue: *releaseBuffer()*.

FIG. 4 is a scenario diagram of image rendering provided in an embodiment of the present disclosure. As shown in FIG. 1 and FIG. 4, a target processing module applies for a native window resource through a window manager (Window Manager) in response to around view activation information. The target processing module may acquire graphic data from camera preview (camera preview), or acquire graphic data collected by a camera from the background through a native develop kit (Native Develop Kit, NDK), and write the acquired graphic data into a Surface corresponding to a native window. A GL consumer (GL Consumer) consumes graphic data in GraphicBuffer, to enable it to be used by OpenGL ES (GL graphics library), and thus, the graphic data can be processed by a graphics processor (GPU). After the processing is completed, IGraphicBufferProducer submits the GraphicBuffer to BufferQueue (submitting a graphic buffer), and Surfaceflinger (a display composition service) acquires the graphic data in BufferQueue for layer management and data processing. Finally, a hardware composition module (hardware composer) composes multiple window layer data, and renders a composed image to a screen through a direct rendering manager (Direct Rendering Manager, abbreviated as DRM). A graphic buffer management module (Graphics Allocator, abbreviated as Gralloc) may manage the allocation, mapping and processing of the graphic buffer.

In a possible implementation, before adding the graphic buffer to the buffer queue, the following is further included:
locking the graphic data in the graphic buffer.

In a specific implementation, before adding the graphic buffer to the buffer queue, the graphic data in the graphic buffer may be locked, to prevent the graphic data in the graphic buffer from being tampered with, which causes the accuracy of graphics display to be affected.

In some embodiments, the method further includes:
acquiring around view deactivation information of the vehicle, and destroying the native window.

In a specific implementation, the around view deactivation information of the vehicle may include state information of the vehicle (for example, a current gear position of the vehicle is not in reverse), or may include a deactivation instruction input by the user. At this time, the in-vehicle infotainment system destroys the native window in response to the around view deactivation information, and end the around view display.

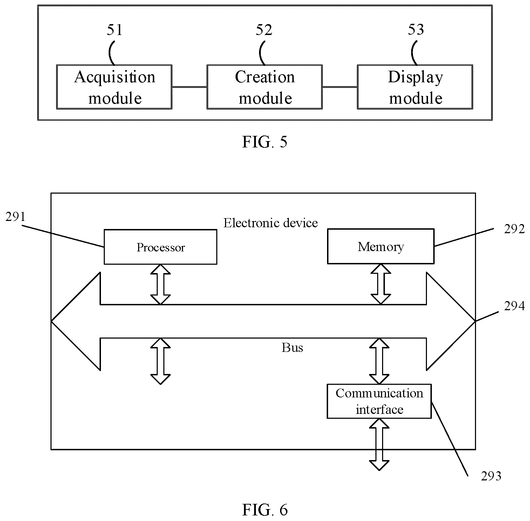

An embodiment of the present disclosure further provides an image processing apparatus. FIG. 5 is a structure diagram of an image processing apparatus provided in an embodiment of the present disclosure. As shown in FIG. 5, the apparatus includes:
an acquisition module 51, configured to acquire around view activation information of a vehicle;
a creation module 52, configured to invoke, according to the around view activation information, a corresponding processing module to apply for a native window resource; and
a display module 53, configured to process graphic data collected by the vehicle to obtain a processed image, and display the processed image by using the native window resource.

In some embodiments, the creation module 52 is specifically configured to:
determine, according to a source of the around view activation information, a target processing module corresponding to the around view activation information from a plurality of candidate processing modules; and
invoke the target processing module to apply for the native window resource.

In some embodiments, the creation module 52 is further specifically configured to:
if the around view activation information is a control instruction input by a user, determine a foreground processing application as the target processing module corresponding to the around view activation information.

In some embodiments, the creation module 52 is further specifically configured to:
if the around view activation information is state information of the vehicle, determine, according to the state information, the target processing module corresponding to the around view activation information from the foreground processing application and a background processing service.

In some embodiments, the creation module 52 is further specifically configured to:
if the vehicle is not fully started, determine the background processing service as the target processing module corresponding to the around view activation information; and
if the vehicle has been fully started, determine the foreground processing application as the target processing module corresponding to the around view activation information.

In some embodiments, the background processing service is configured to create a Surface object through SurfaceComposerClient and write the graphic data collected by the vehicle into the Surface object; and
the foreground processing application is configured to create a Surface object through SurfaceView, and write the graphic data collected by the vehicle into the Surface object.

In some embodiments, the display module 53 is specifically configured to:
write the graphic data collected by the vehicle into a graphic buffer corresponding to the native window resource, render the graphic data in the graphic buffer, and add the graphic buffer into a buffer queue after the rendering is completed; and
acquire the graphic data in the graphic buffer from the buffer queue for composition to obtain the processed image.

In some embodiments, the display module 53 is further specifically configured to:
lock the graphic data in the graphic buffer.

In some embodiments, the creation module 52 is further configured to:
acquire around view deactivation information of the vehicle, and destroy the native window.

It should be noted that the image processing apparatus is configured to execute the image processing method as described above, and a specific implementation thereof is as described above, which is not described here.

FIG. 6 is a structure diagram of an electronic device provided in an embodiment of the present disclosure. As shown in FIG. 6, the electronic device includes:
a processor (processor) 291, and the electronic device further includes a memory (memory) 292; where a communication interface (Communication Interface) 293 and a bus 294 may further be included. The processor 291, the memory 292, and the communication interface 293 may communicate with each other through the bus 294. The communication interface 293 may be used for information transmission. The processor 291 may invoke a logic instruction in the memory 292 to execute the methods in the above embodiments.

In addition, the above-mentioned logical instruction in the memory 292 may be implemented in a form of a software functional unit and may be stored in a computer-readable storage medium when being sold or used as an independent product.

As a computer-readable storage medium, the memory 292 may be configured to store software programs and computer executable programs, such as program instructions/modules corresponding to the methods in the embodiments of the present disclosure. The processor 291 executes functional applications and data processing by running software programs, instructions and modules stored in the memory 292, that is, implements the method in the above method embodiments.

The memory 292 may include a storage program area and a storage data area, where the storage program area may store an operating system and an application program required by at least one function; and the storage data area may store data created according to the use of a terminal device, etc. In addition, the memory 292 may include a high-speed random access memory, and may further include a non-volatile memory.

An embodiment of the present disclosure provides a non-transitory computer-readable storage medium, where the computer-readable storage medium stores a computer executable instruction which, when executed by a processor, is used for implementing the methods described in the previous embodiments.

An embodiment of the present disclosure provides a computer program product, including a computer program which, when executed by a processor, implements the method provided in any one of the above embodiments in the present disclosure.

Other implementations of the present disclosure will be easily conceived of by those skilled in the art after considering the specification and practicing the invention disclosed herein. The present disclosure is intended to cover any variations, uses or adaptations of the present disclosure, which follow general principles of the present disclosure and include common sense or common technical means in the art that are not disclosed in the present disclosure. The specification and the embodiments are to be regarded as exemplary only, and the true scope and spirit of the present disclosure are indicated by the following claims.

It should be understood that the present disclosure is not limited to the precise structure described above and shown in the drawings, and various modifications and changes may be made without departing from the scope thereof. The scope of the present disclosure is limited only by the appended claims

## Claims

1. An image processing method, comprising:
acquiring around view activation information of a vehicle;
invoking, according to the around view activation information, a corresponding processing module to apply for a native window resource; and
processing graphic data collected by the vehicle to obtain a processed image, and displaying the processed image by using the native window resource.

2. The method according to claim 1, wherein the invoking, according to the around view activation information, the corresponding processing module to apply for the native window resource comprises:
determining, according to a source of the around view activation information, a target processing module corresponding to the around view activation information from a plurality of candidate processing modules; and
invoking the target processing module to apply for the native window resource.

3. The method according to claim 2, wherein the determining, according to the source of the around view activation information, the target processing module corresponding to the around view activation information from the plurality of candidate processing modules comprises:
if the around view activation information is a control instruction input by a user, determining a foreground processing application as the target processing module corresponding to the around view activation information.

4. The method according to claim 2, wherein the determining, according to the source of the around view activation information, the target processing module corresponding to the around view activation information from the plurality of candidate processing modules comprises:
if the around view activation information is state information of the vehicle, determining, according to the state information, the target processing module corresponding to the around view activation information from a foreground processing application and a background processing service.

5. The method according to claim 4, wherein the determining, according to the state information, the target processing module corresponding to the around view activation information from the foreground processing application and the background processing service comprises:
if the vehicle is not fully started, determining the background processing service as the target processing module corresponding to the around view activation information; and
if the vehicle has been fully started, determining the foreground processing application as the target processing module corresponding to the around view activation information.

6. The method according to claim 5, wherein the method further comprises:
when the background processing service is used as the target processing module corresponding to the around view activation information, creating a Surface object through SurfaceComposerClient, and writing the graphic data collected by the vehicle into the Surface object; and
when the foreground processing application is used as the target processing module corresponding to the around view activation information, creating a Surface object through SurfaceView, and writing the graphic data collected by the vehicle into the Surface object.

7. The method according to claim 1, wherein the processing the graphic data collected by the vehicle to obtain the processed image comprises:
writing the graphic data collected by the vehicle into a graphic buffer corresponding to the native window resource, rendering the graphic data in the graphic buffer, and adding the graphic buffer into a buffer queue after the rendering is completed; and
acquiring the graphic data in the graphic buffer from the buffer queue for composition to obtain the processed image.

8. The method according to claim 7, wherein before adding the graphic buffer to the buffer queue, the method further comprising:
locking the graphic data in the graphic buffer.

9. The method according to any one of claims 1 to 8, wherein the method further comprises:
acquiring around view deactivation information of the vehicle, and destroying the native window resource.

10. An image processing apparatus, comprising:
an acquisition module, configured to acquire around view activation information of a vehicle;
a creation module, configured to invoke, according to the around view activation information, a corresponding processing module to apply for a native window resource; and
a display module, configured to process graphic data collected by the vehicle to obtain a processed image, and display the processed image by using the native window resource.

11. An electronic device, comprising a processor and a memory communicatively connected with the processor;
wherein the memory stores a computer executable instruction; and
the processor executes the computer executable instruction stored in the memory to implement the method according to any one of claims 1 to 9.

12. A computer-readable storage medium, wherein the computer-readable storage medium stores a computer executable instruction which, when executed by a processor, is used for implementing the method according to any one of claims 1 to 9.

13. A computer program product, comprising a computer executable instruction which, when executed by a processor, is used for implementing the method according to any one of claims 1 to 9.
